# EUROPÄISCHE PATENTANMELDUNG

(11) **EP 2 258 552 A2**
(43) Veröffentlichungstag der Anmeldung: **08.12.2010**
(21) Anmeldenummer: 10005805.6
(22) Anmeldetag: 04.06.2010
(51) Int. Cl.: B41F 13/02, B41F 13/60, B41F 33/00, B41F 33/14

(54) **Vorrichtung zum Erfassen einer Markierung auf einem flächigen Gegenstand und Verfahren dazu sowie Einrichtung zum Trennen von Abschnitten von einem flächigen Gegenstand**

(30) Priorität: 04.06.2009 DE 102009023948
(71) Anmelder: Baumer Innotec AG, 8500 Frauenfeld (CH)
(72) Erfinder: Müller, Klaus Friedrich, Dr., 69120 Heidelberg (DE); Tiedeke, Joachim, 8280 Kreuzlingen (CH)
(74) Vertreter: Schmidt, Oliver

(57) **Zusammenfassung**

Die Erfindung sieht ein Verfahren und eine Vorrichtung zum Erfassen wenigstens einer auf einem flächigen Gegenstand (23, 24), insbesondere einer Druckbahn vorgesehenen Markierung (81, 82), wobei die Markierung (81, 82) mit Hilfe eines optischen Elementes (10) auf eine von einer Sensoreinrichtung (51, 52) erfassbaren Position abgebildet wird und die Sensoreinrichtung (51, 52) die abgebildete wenigstens eine Markierung (81, 82) hinsichtlich einer Kenngröße aufnimmt, vor. Erfindungsgemäß wird als wenigstens eine Markierung eine auf dem flächigen Gegenstand vorhandene Wort- und/oder Bildaufbringung verwendet. Die wenigstens eine Markierung wird von der Sensoreinrichtung vor dem Erfassungsvorgang übergeben und gespeichert. Erfindungsgemäß wird ein Vergleich der übergebenen Markierung mit der von der Sensoreinrichtung (51, 52) aufgenommenen wenigstens einen Markierung (81, 82) wird hinsichtlich der Kenngröße durchgeführt. Ferner sieht die Erfindung eine Einrichtung zum Trennen (27) von Abschnitten (23a, 24a) von einem flächigen Gegenstand (23, 24) vor.

## Beschreibung

Die Erfindung betrifft eine Vorrichtung zum Erfassen einer auf einem flächigen Gegenstand, wie etwa einer Druckbahn oder anderen bogenförmigen, typischerweise aus Papier oder Karton gefertigten bedruckten, flächigen Erzeugnissen vorgesehenen Markierung und ein Verfahren zur Erfassung einer entsprechenden Markierung sowie eine Einrichtung zum Trennen von Abschnitten von einem solchen Gegenstand.

Insbesondere besteht in der Druckindustrie weithin ein Erfordernis, bei Druckvorgängen eine hohe Positionsgenauigkeit zwischen Druckstoff und Druckform zu erreichen. Vor allem gilt dies für einen mehrfarbigen Bogenoffsetdruck, denn dabei werden in verschiedenen Druckwerken nacheinander einzelne Teilbilder in unterschiedlichen Druckfarben wie Gelb, Zyan, Schwarz oder Magenta übereinander gedruckt. Es versteht sich, dass die Qualität eines über ein derartiges Druckverfahren erreichten Druckerzeugnisses wesentlich von einer Positionsgenauigkeit beim Übereinanderdrucken der verschiedenen Druckfarben abhängt. Insoweit Abweichungen der Drucke der einzelnen Farben auftreten, sind Einbußen sowohl in der Konturzeichnung des gewünschten Druckes als auch in dessen Farbechtheit zu beobachten. Die für solche Qualitätsverluste des Druckes ursächlichen Abweichungen vom geforderten Über- und/oder Nebeneinanderdruck werden als Passerdifferenzen bezeichnet. Es sind bereits Verfahren zur Reduzierung oder Vermeidung von Passerdifferenzen vorgeschlagen worden.

So ist aus der DE 40 12 608 A1 ein Verfahren zur Bestimmung von Passerdifferenzen bekannt geworden, wobei eine Druckbildstelle mit zu erwartenden Passerdifferenzen von einer Farbvideokamera vergrößert erfasst wird und eine Bestimmung der Passerdifferenzen durch eine Feststellung von Lagen der unterschiedlichen farbigen Teilbilder zueinander erfolgt. Bei dem Verfahren wird das optische Signal der Farbvideokamera entsprechend der beim Druck verwendeten Druckfarben farblich separiert. Eine durch ein Übereinanderdrucken von wenigstens zwei Druckfarben entstehende Kontur ist daher in zwei Darstellungen der wenigstens zwei Druckfarben aufnehmbar. Über eine Ermittlung eines Versatzes der Teilbilder relativ zueinander kann eine Passerdifferenz berechnet werden und bei nachfolgenden Druckvorgängen berücksichtigt werden. Das in der DE 40 12 608 A1 beschriebene Verfahren erfordert bei aufwendiger Optik einen hohen Rechenaufwand.

Auch aus der EP 1 808 680 A2 ist ein Verfahren und eine Vorrichtung zur Korrektur einer mittels eines Detektors erfassten Farbe bekannt geworden. Bei diesem Farbkorrekturverfahren werden über einen numerischen Abgleich mit hinterlegten Referenzwerten korrigierte Farbdrucke erreicht. Allerdings ist auch hier der numerische Aufwand erheblich.

Es versteht sich, dass sich die apparativen Anforderungen in Abhängigkeit von einer Relativbeschleunigung des Druckbogens zu der Druckform beziehungsweise zu einer Erkennungs- oder Korrektureinrichtung erhöhen. Aus der US 2005/0254067 A1 ist eine Inspektionsvorrichtung für sich mit hoher Geschwindigkeit bewegenden Werkstücken, auf denen Barcodes vorgesehen sind, beschrieben. Die Inspektionsvorrichtung bestimmt Gleichmäßigkeit und Wiederholgenauigkeit der Barcodes auf aufeinanderfolgenden Werkstücken. Erfasste Abweichungen der Position der Barcodes auf unterschiedlichen Werkstücken werden benutzt, um den Aufdruck der Barcodes zu korrigieren. Die in der US 7,365,854 B2 beschriebene Inspektionsvorrichtung arbeitet nach einem Referenzprinzip, indem von einem oder mehreren Farbdetektoren aufgenommene optische Signale mit hinterlegten Referenzwerten verglichen werden und darüber erhaltene Abweichungen auf einen Bedruckungsprozess der Werkstücke rückgekoppelt werden. Auch hier ist der rechentechnische Aufwand nicht unerheblich und eine Reaktionsmöglichkeit mitunter nur verzögert gegeben.

Ferner sind aus der DE 102 50 592 A1 und der DE 195 17 842 A1 Verfahren zur Messung von Druck- beziehungsweise Messmarken bekannt. Bei der DE 195 17 842 werden um 90 Grad versetzt angeordnete Passermarken mittels einer entsprechenden Drehung der Messeinrichtung aufgenommen und analysiert. In der DE 102 505 92 werden Druckmarken auf bewegten Druckbahnen mit Hilfe von lichtempfindlichen Sensoren erfasst, wobei die Druckmarken durch schräg zur Bahnlaufrichtung angeordnete strichförmige Sensorelemente abgetastet werden. Aus den Durchlaufzeiten der Druckmarken bezüglich der Sensoren wird eine Information über eine Seitenlage der Druckmarke relativ zum Sensor ermittelt. Hierbei ist man auf die Güte der vorhandenen Druckmarken angewiesen, die darüber hinaus immer zusätzlich auf die Druckbahn aufgebracht werden müssen.

Der Erfindung liegt daher die Aufgabe zugrunde, die bei Bearbeitungsvorgängen mit im flächigen, wie etwa bogenförmigen Gegenständen wie Druckbahnen oder Druckerzeugnissen erforderlichen Positionsbestimmungen ohne ein zusätzliches Aufbringen von den Druck- beziehungsweise das Erscheinungsbild des bogenförmigen Gegenstands störenden Markierungen auszukommen.

Die Erfindung wird mit einem Verfahren, einer Vorrichtung und einer Einrichtung gemäß den unabhängigen Ansprüchen gelöst. Vorteilhafte Ausgestaltungen und Weiterbildungen der Erfindung sind in den jeweiligen abhängigen Ansprüchen angegeben.

Entsprechend sieht die Erfindung ein Verfahren zum Erfassen wenigstens einer auf einem flächigen Gegenstand, insbesondere einer Druckbahn oder einem Druckerzeugnis vorgesehenen Markierung vor, bei dem die Markierung mit Hilfe eines optischen Elementes auf eine Sensoreinrichtung abgebildet wird und die Sensoreinrichtung eine Abbildung der wenigstens einen Markierung hinsichtlich einer Kenngröße aufnimmt. Bei dem Verfahren wird als wenigstens eine Markierung eine auf dem Gegenstand vorhandene Wort- und/oder Bildinformation verwendet. Erfindungsgemäß wird das Erfassen der wenigstens einen Markierung in Abhängigkeit eines Vergleichs einer von der Sensoreinrichtung vor dem Erfassungsvorgang hinsichtlich der Kenngröße ermittelten Referenz der wenigstens einen Markierung mit der von der Sensoreinrichtung aufgenommenen wenigstens einen Markierung hinsichtlich der Kenngröße verifiziert.

Ebenso wird erfindungsgemäß eine Vorrichtung zum Erfassen wenigstens einer auf einem flächigen Gegenstand, insbesondere einer Druckbahn oder allgemeiner einem Druckerzeugnis vorgesehenen Markierung vorgeschlagen, wobei die Vorrichtung ein optisches Element zur Abbildung der wenigstens einen Markierung auf eine Sensoreinrichtung enthält und die Sensoreinrichtung zur Aufnahme der abgebildeten wenigstens eine Markierung hinsichtlich einer Kenngröße ausgebildet ist. Die Vorrichtung zeichnet sich dadurch aus, dass die wenigstens eine Markierung eine auf dem Gegenstand vorhandene Wort- und/oder Bildinformation ist und dass sie eine der Sensoreinrichtung zugeordnete Komparatoreinheit enthält, in der eine Referenz der wenigstens einen Markierung hinsichtlich ihrer Kenngröße speicherbar ist. Die Komparatoreinrichtung ist erfindungsgemäß zum Verifizieren des Erfassens der wenigstens einen Markierung über eine Auswertung eines Vergleichs der gespeicherten Markierung mit der von der Sensoreinrichtung aufgenommenen, wenigstens einen Markierung hinsichtlich der Kenngröße ausgebildet.

Ferner sieht die Erfindung dazu eine Einrichtung zum Trennen von Abschnitten von einem solchen flächigen Gegenstand, insbesondere einer Druckbahn oder allgemein einem Druckerzeugnis entlang vorgebbarer Markierungen vor, welche eine Vorrichtung zum Erfassen wenigstens einer auf dem Gegenstand vorgesehenen Markierung umfasst.

Erfindungsgemäß wird eine von einem auch bei der eigentlichen Positionserfassung zu verwendenden System vorab ermittelte Markierung als Referenz in einem Speicher- bzw. Komparatormedium abgelegt. Darauf wird bei einer mitunter in einer sehr kurzen Zeitspanne durchzuführenden Markierungserkennung in Echtzeit in einem Vergleichsverfahren zurückgegriffen. In Abhängigkeit von dem Vergleichsergebnis zwischen der in Echtzeit aufgenommenen wenigstens einen Markierung und der vorab abgelegten Referenz kann das tatsächliche Erfassen der wenigstens einen Markierung verifiziert werden.

Im Fall eines hinreichend übereinstimmenden Vergleichergebnis ist dann eine Positionsbestimmung sogar bis hinunter zu einem Pixelmaßstab gewährleistet. Über ein Erfassen wenigstens einer Markierung kann erfindungsgemäß eine absolute Position des flächigenGegenstands bestimmt werden. Dies geschieht über die Kenntnis des Abstands der wenigstens einen Markierung von Rändern des Gegenstands. Mit Hilfe einer Kenntnis der relativen Abstände mehrerer Markierungen und der absoluten Erfassungsposition kann eine größenmäßige Vermessung des Gegenstands erfolgen.

Die Erfindung bringt den Vorteil einer großen Variabilität unter Vermeidung zusätzlichen apparativen Aufwands mit sich.

In einer Ausführung des erfindungsgemäßen Verfahrens kann eine Referenz der wenigstens einen Markierung der Sensoreinrichtung jeweils vor dem Erfassungsvorgang zugeführt werden und dann mit der von der Sensoreinrichtung aufgenommenen wenigstens einen Markierung hinsichtlich der Kenngröße verglichen werden. Die Referenz kann aber auch periodisch nachgemessen werden oder es kann auf gespeicherte Referenzen zurückgegriffen werden. Erfindungsgemäß wird als Kenngröße der wenigstens einen Marke ein mit der Sensoreinrichtung aufnehmbarer Helligkeitskontrast gewählt. Das Vorliegen der wenigstens einen Markierung bzw. deren Erfassung kann aber auch an Hand eines Farbkontrasts in einer oder mehreren Farben nachgewiesen bzw. durchgeführt werden.

Zu einer Verringerung eines Einflusses von optischen Fehlern oder Abweichungen an Vorlagen eignen sich erfindungsgemäß ausgedehnte Kennzeichnungen als Markierung im Sinne der Erfindung gut. Besonders vorteilhaft ist die Verwendung einer Umrisslinie bzw. Kante einer auf dem flächigen Gegenstand angebrachten Kennzeichnung als zur Positionierung bzw. Positionsbestimmung benutzte Markierung. Hier kann besonders vorteilhaft ein mittlerer Bereich der Umrisslinie oder Kante mit Licht bestrahlt und auf die Sensoreinrichtung abgebildet werden. Veränderungen im Farb- und/oder Helligkeitskontrast sind hier in der Regel ausreichend stark.

Sehr einfach kann als positionsgebende Markierung eine auf wenigstens einem Abschnitt des flächigen Gegenstands angebrachte Kopf- und/oder Fußbedruckungszeile sein. Bei flächigen Gegenständen, die im Rahmen der Erfindung u.a. als Druckbahn oder Druckerzeugnis aus Papier, Kunststoff oder ähnlichen, über Walzen transportierbaren Materialien oder flächigen Körpern wie beispielsweise elastischen Folien etwa aus metallenen Materialien oder elastischen Platten zu verstehen sind, sind diese in bekanntem Anstand von Rändern angebracht. Dies ist insbesondere bei Briefbögen, Briefumschlägen oder sonstigen Drucksachen der Fall.

Erfindungsgemäß wird ein Schwellenwert der Kenngröße vorgegeben, über dessen Nachweis ein Vorliegen der wenigstens einen Markierung erkannt wird. Dies geschieht in einer Referenzerfassung der Markierung, bei der die Sensoreinrichtung und die Komparatoreinheit bzw. auch die anderen optischen Abbildungseinrichtungen auf die zu verwendende Markierung eingestellt bzw. sogar optimiert werden. Je besser der Vorgang dieser im Grunde als "Anlernverfahren" zu bezeichnenden Referenzvorgabe ist, umso weniger fallen bei der wirklichen Positionserkennung auftretende Unzulänglichkeiten ins Gewicht. Bei der Durchführung der Referenzmarkierungserfassung können Einflüsse von Streu- und/oder Fremdlicht gleich mitberücksichtigt werden und die Genauigkeit der Echtzeiterfassung dadurch weiter erhöhen.

Mit Vorteil wird der Schwellenwert, der das Vorliegen einer Markierung festlegt, in einem mittleren Bereich der wenigstens einen Markierung festgelegt und an einer Referenzmarkierung entsprechend im Vorfeld eingelesen. Selbst im Fall einer unscharfen optischen Abbildung der Markierung auf die von der Sensoreinrichtung erfassbaren, vorzugsweise zeilenartigen Position ist hier der Schwellenwert noch hinreichend gut und diskret erfassbar. Das gilt auch noch im Pixelmaßstab.

Wird ein Abstand der wenigstens einen Markierung von der Sollposition mit Hilfe der Sensoreinrichtung oder einer weiteren Sensoreinrichtung zu wenigstens zwei Zeitpunkten eines Bewegungsvorgangs des flächigen, beispielsweise bogenförmigen Gegenstands aufgenommen, so kann erfindungsgemäß eine Markierungsgeschwindigkeit bzw. entsprechend eine Ankunftszeit der Markierung an der Sollposition bestimmt werden. Bei einer Berechnung kann eine Bewegung mit konstanter Geschwindigkeit zugrunde gelegt werden. Im Fall einer Annahme einer beschleunigten Bewegung ist allerdings eine Messung an drei Positionen vorteilhaft. Die Geschwindigkeitsbestimmung verleiht dem erfindungsgemäßen Verfahren Redundanz. Denn sowohl aus der Markierungserkennung bzw. Erfassung an der Sollposition als auch aus der Geschwindigkeitsbestimmung kann der flächige Gegenstand positionsgenau einer Weiterverarbeitung wie einer weiteren Bedruckung, einem Schneidprozess oder einer Entnahme aus der Vorrichtung zugeführt werden. Bei Ausfall oder einem Vorliegen eines Fehlers in einer der Positionsbestimmungsvarianten ist die verbleibende allein immer noch ausreichend. Ist die Geschwindigkeit also bestimmt, kann in exakter Weise das Erreichen einer Sollposition der Markierung oder eines zur Markierung entlang der Vorschubrichtung beabstandeten Punktes unter Einbeziehung der Geschwindigkeit erfolgen. Das Erreichen der Sollposition kann dabei auch nach der letzten Messung erfolgen. In diesem Fall erfolgt anhand der bestimmten Geschwindigkeit und zumindest einer zu einem bestimmten Zeitpunkt ermittelten Position eine Extrapolation des Zeitpunkts, an welchem die Sollposition erreicht wird. Ist dieser Zeitpunkt erreicht, kann ein Schaltsignal ausgegeben werden, um ein bestimmtes Ereignis, insbesondere die Betätigung einer Schneidvorrichtung auszulösen.

Demgemäß ist vorgesehen, dass anhand einer wiederholten Erkennung der Position der Markierung die Geschwindigkeit des flächigen Gegenstands gegenüber der Sensoreinrichtung ermittelt und ein Schaltvorgang ausgelöst wird, wenn die Markierung oder ein zur Markierung entlang der Vorschubrichtung in definiertem Abstand beabstandeter Punkt eine anhand der Geschwindigkeit ermittelte Ortsposition erreicht. Die erfindungsgemäße Vorrichtung ist entsprechend eingerichtet, Positionen einer Markierung mehrmals hintereinander zu erkennen und umfasst eine Recheneinrichtung, welche eingerichtet ist, anhand der Positionen der Markierung einen Zeitpunkt zu berechnen, an welchem die Markierung, oder ein zur Markierung entlang der Vorschubrichtung in definiertem Abstand beabstandeter Punkt eine Sollposition erreicht, wobei die Vorrichtung einen Schaltausgang aufweist, an welchem unter Ansprechen darauf, dass die Sollposition erreicht ist, ein Schaltsignal ausgegeben wird.

Mit dem Schaltvorgang kann ein Trennwerkzeug, insbesondere ein Schneidwerkzeug ausgelöst werden, welches den Gegenstand an definierter Position bezüglich der Position der Markierung auftrennt.

Erfindungsgemäß können bevorzugt auf einem flächigen Gegenstand bzw. auf einer Druckbahn mehrere Markierungen mit unterschiedlichen Schwellenwerten erfasst werden. Dies bietet insbesondere dann Vorteile, wenn man mit unterschiedlichen Auflösungen arbeitet. So können mit unterschiedlicher Genauigkeit auflösbare Markierungen gewählt werden. Die Größe der Messfelder kann dabei ebenso unterschiedlich eingestellt werden wie die Markierung hinsichtlich ihrer Auflösung ausgewählt werden können. In bevorzugter Weiterführung der vorliegenden Erfindung ist eine Markierungserfassung dann auch mit variablen Schwellenwerten durchführbar.

Als Lichtquelle finden erfindungsgemäß Licht emittierende Dioden, LEDs, Einsatz. Die optischen Sensoreinrichtungen sind den zu verwendenden LEDs in Farbe und Intensität angepasst zu wählen. Erfindungsgemäße Abtast- bzw. Messfrequenzen liegen im Bereich bis zu einigen Zehn MHz. Vorzugsweise beträgt die Belichtungszeit pro Bild weniger als 50 Mikrosekunden. Die bei der erfindungsgemäßen Vorrichtung verwendeten Komponenten werden so gewählt, dass ein hoher Miniaturisierungsgrad und damit ein geringer Raumbedarf erreichbar ist. Bei den so erreichbaren kurzen Messentfernungen wird ein Einfluss von Streu- oder Fremdlicht ausreichend verringert. Der Einfluss kann zusätzlich auch noch dadurch verringert werden, indem eine gepulste Beleuchtung verwendet wird, die mit dem Shutter der Kamera mittels einer Synchronisierungseinrichtung synchronisiert ist. Vorzugsweise beträgt dabei die Pulsdauer weniger als die oben genannten 50 Mikrosekunden.

Zudem kann eine Dunkelmessung, also eine Bildaufnahme bei ausgeschalteter Beleuchtung durchgeführt werden, um den Restlichtanteil zu bestimmen. Der Restlichtanteil kann dann vorteilhaft von den während des Erkennungsvorgangs aufgenommenen Bildern subtrahiert werden.

Um hohe Taktraten bei der Bildaufnahme zu erhalten und damit auch bei schnellen Vorschubgeschwindigkeiten des flächigen Gegenstands die Markierung sicher finden zu können, ist es gegebenenfalls günstig, kleine Bildsensoren zu verwenden. Vorzugsweise beträgt die Bildwiederholrate mindestens 500 Hz. Es kann ein kleiner Sensor mit höchstens 500 Pixeln in Richtung transversal zur Vorschubrichtung verwendet werden. Insbesondere können auch Zeilensensoren eingesetzt werden, wobei die Bildinformation aus sukzessive aufgenommenen Bildzeilen zusammengesetzt wird.

Die Erfindung wird nachfolgend anhand von den begleitenden deutlich vereinfachten Zeichnungen an einem nicht beschränkenden sondern lediglich beispielhaften Ausführungsbeispiel näher erläutert.

Dabei zeigen
- Fig. 1a: eine schematische Darstellung einer Ausführungsform der erfindungsgemäßen Vorrichtung zur Erfassung wenigstens einer Markierung,
- Fig. 1b: eine Aufsicht auf einen flächigen Gegenstand in Form einer Druckbahn,
- Fig. 1c: eine schematische Seitenansicht einer Trenneinrichtung gemäß der vorliegenden Erfindung in vereinfachter Darstellung und
- Fig. 2: eine schematisch vereinfachte Darstellung einer erfindungsgemäß als Markierung benutzbaren Druckmarke.

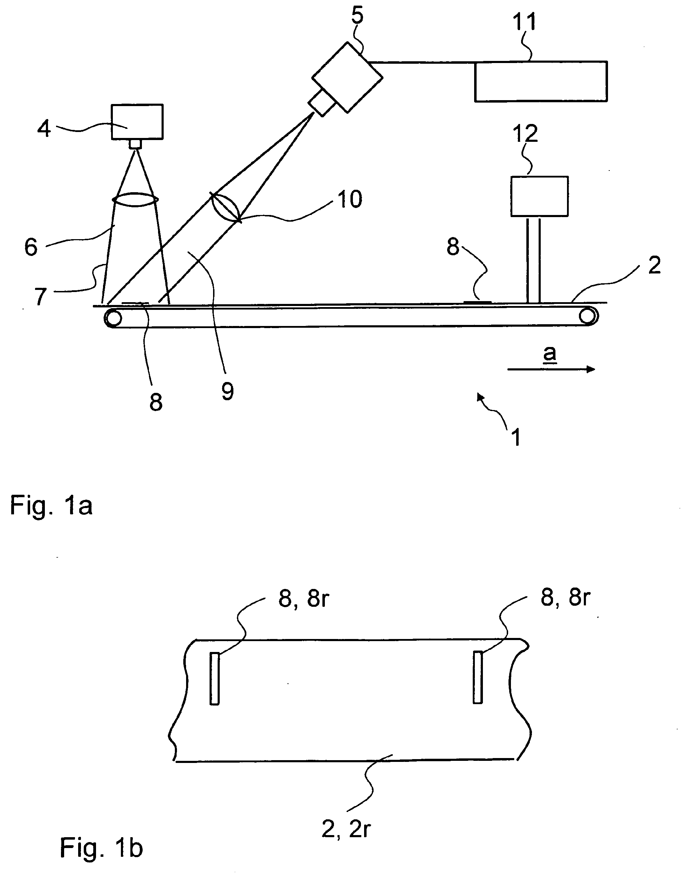

Nach Figur 1a wird in einer insgesamt mit dem Bezugszeichen 1 bezeichneten erfindungsgemäßen Vorrichtung zum Erfassen wenigstens einer Markierung eines als Druckbahn 2 aus Papier ausgeführten flächigen Gegenstands auf einer Transportanlage 3 in Richtung des Pfeils a bezüglich einer Lichtquelle 4 und einem Positionssensor 5 bewegt. Von der Lichtquelle 4 nach Fig. 1a in einem Winkel von 90 Grad mittels einer Kollimatorlinse 6 auf einen Bereich der Druckbahn 2 gestrahlte Lichtstrahlen 7 werden im Bereich einer polychromen oder anderweitig optisch kontrastierenden Markierung 8 teilweise reflektiert. Zum Abbilden des von der Markierung 8 teilweise reflektierten Strahlenbündels 9 auf den Positionssensor 5 ist eine weitere in einem Winkel von 45 Grad relativ zum Einfallslichtstrahl 7 angeordnete Sammellinse 10 vorgesehen. Der Positionssensor erfasst dabei einen auch entlang der Vorschubrichtung ausgedehnten Bereich. So lange das auf den Positionssensor 5 abgebildete Lichtbündel 9 keine Intensitäts- oder sonstigen Änderungen aufweist, läuft der Vorschub der Druckbahn 2 unverändert weiter. Durch Einsatz mehrerer Sensoren oder eine schnelle mehrfache Erfassung kann die Position der Markierung insbesondere auch mehrfach bestimmt werden. Anhand des zeitlichen Abstands kann damit die Geschwindigkeit der Markierung 8 gegenüber dem Positionssensor ermittelt werden, wobei im Falle von mindestens drei Messungen auch eine beschleunigte Bewegung erfasst werden kann. Ist die Geschwindigkeit bekannt, kann die erfindungsgemäße Vorrichtung den Zeitpunkt berechnen, zu welchem die Markierung oder ein zur Markierung in definiertem Abstand entlang der Lauf- oder Vorschubrichtung beabstandeter Punkt an einer Sollposition angelangt. Hier kann dann die Druckbahn beispielsweise mittels einer Schneidvorrichtung in einzelne Bögen geschnitten werden.

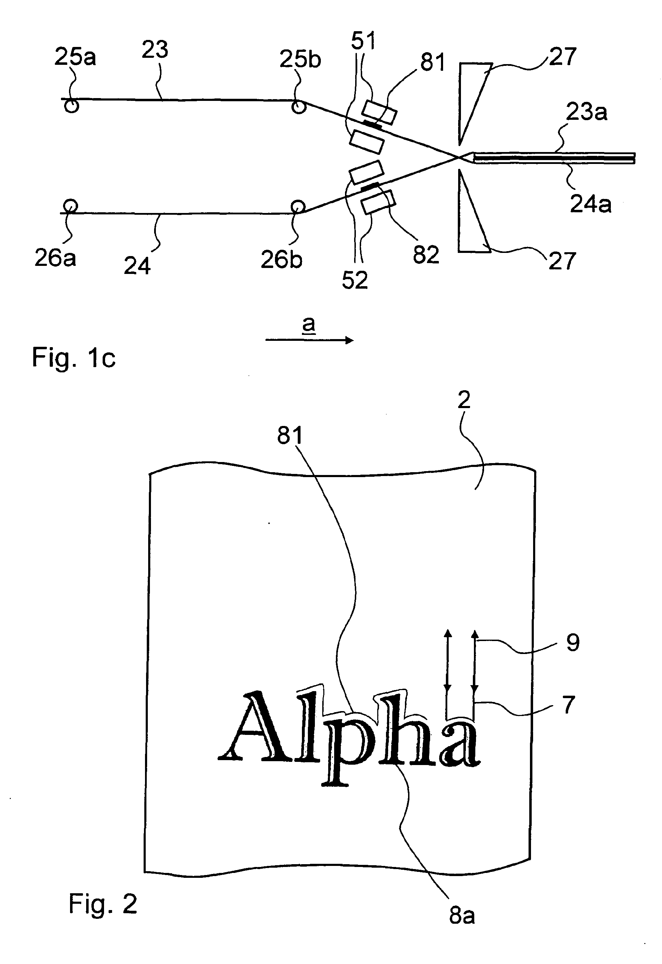

Sofern die von der Lichtquelle 4 ausgesandten Lichtstrahlen 7 auf eine in Fig. 2 exemplarisch dargestellte Markierung 8a treffen, nimmt der Positionssensor 5 eine Intensitätsänderung auf. Von der dem Positionssensor 5 zugeordneten Speicher- bzw. Komparatoreinheit 11 wird an Hand der erhaltenen Intensitätsänderung das Vorhandensein einer Markierung 8 festgestellt. Erfindungsgemäß wurde eine Referenzdruckbahn 2r mit der Transportanlage 3 in der in Fig. 1a gezeigten Weise an der Lichtquelle 4 und dem Positionssensor 5 vorbeigeführt, wobei der Positionssensor 5 die durch die Markierung 8r verursachten Intensitätsänderungen aufgenommen hat. Die vorab so aufgenommenen Intensitätsänderungen werden in der dem Positionssensor 5 zugeordneten Speicher- bzw.

Komparatoreinrichtung 11 abgelegt. Durch eine Mittelungstechnik kann der hierbei "angelernte", einer Identifizierung der Markierung 8 dienende Intensitätsgrad hinreichend präzise hinterlegt werden.

Mit Hilfe eines rechentechnisch in der Speicher- bzw. Komparatoreinheit 11 durchgeführten Vergleichs der an Hand der Druckbahn 2r an der Referenzmarkierung 8r aufgenommenen und der an der Markierung 8 der Druckbahn 2 aufgenommenen Intensitätswerte des jeweils reflektierten Lichtbündels 9, 9r kann das Vorliegen der Markierung 8 (Fig. 1b) verifiziert, sowie deren Position zum Aufnahmezeitpunkt ermittelt werden. Dabei wird in der Komparatoreinheit 11 eine maximal zulässige Abweichung der beiden miteinander zu vergleichenden Markierungen 8r, 8 hinterlegt, bis zu der eine tatsächliche Erfassung der Markierung 8 noch als gegeben angesehen werden kann. Über eine Detektion der Markierung 8 kann über den bekannten beziehungsweise vorgegebenen Abstand zwischen Lichtquelle 4 und Positionssensor 5 die Druckbahn 2 positionsgerecht einer Weiterverarbeitung, etwa einem Schneidprozess zugeführt werden.

Ein solcher Schneid- beziehungsweise Trennprozess, bei dem die Druckbahn 8 in Abschnitte 22 unterteilbar ist, ist in einer Anwendung einer erfindungsgemäßen Vorrichtung in Fig. 1c schematisch veranschaulicht. Dort ist eine bei einem Kuvertierungsverfahren einsetzbare Einrichtung 20 gezeigt, bei der Papierbahnen 23 und 24 über jeweilige Transportrollen 25a, 25b, 26a, 26b in Richtung des Pfeils a einer Trenneinrichtung 27 zugeführt werden. In Abhängigkeit von jeweils auf den Druckbahnen 23 und 24 vorgesehenen Markierungen 81 und 82 wird durch die Trenneinrichtung 27 ein Trennvorgang eingeleitet. Die Markierungen 81 und 82 werden mit grob vereinfacht dargestellten und denjenigen der Fig. 1a entsprechenden optischen Positions-Erkennungsmitteln 51, 52 erfasst. Sofern die optischen Positions-Erkennungsmittel 51 und 52 einen durch die Markierungen 81 und 82 hervorgerufenen Intensitätsunterschied eines optischen Abtastsignals erfassen, wird ein Steuerungssignal an die Trennvorrichtung 27 derart abgegeben, dass die Druckbahnen 23, 24 an einer Trennstelle 28 durchtrennt werden. Die so durch Wiederholung des Trennvorganges in Abhängigkeit von periodisch angeordneten Markierungen 81, 82 erhaltenen Druckbahnabschnitte 23a, 24a werden erfindungsgemäß übereinander liegend in Richtung des Pfeils a transportiert.

In einer Anwendung des erfindungsgemäßen Verfahrens beziehungsweise einer erfindungsgemäßen Vorrichtung zum Trennen von Druckbahnen entlang vorgegebener Trennlinien in Abschnitte können auf die vereinfacht in Fig. 1b dargestellte Weise unterschiedliche Seiten von Briefen, Rechnungen oder Prospekten einer Kuvertierungsmaschine zugeführt und in dieser positionsgenau abgelegt und einer Weiterverarbeitung etwa in Form einer Einbringung einer Falzung unterzogen werden.

Im Rahmen der Erfindung kann wie in Fig. 2 gezeigt dabei eine standardmäßig auf der Druckbahn 2 vorgesehene Textzeile, wie etwa eine Kopf-, Fuß- oder etwa Datumszeile als Markierung 8a verwendet werden. Bevorzugt kann eine Erfassung einer Markierung anhand eines vorgegebenen (erlernten) Schwellenwertes ermittelt werden. Ein solcher Schwellenwert wird bei einer ausgedehnten Markierung wie etwa in Fig. 2 in der Mitte der Markierung 8a liegend festgelegt, um durch die erfindungsgemäß verwendete Abbildungsoptik verursachte Abbildungsfehler zu minimieren. Dazu wird nach Fig. 2 der Schwellenwert des Umrissabschnitts 8u der Markierung 8a verwendet.

## Patentansprüche

1. Verfahren zum Erfassen wenigstens einer auf einem flächigen Gegenstand (2), insbesondere einer Druckbahn vorgesehenen Markierung (8), wobei die Markierung (8) mit Hilfe eines optischen Elementes (10) auf eine Sensoreinrichtung (5) abgebildet wird und die Sensoreinrichtung (5) die abgebildete wenigstens eine Markierung (8) hinsichtlich einer Kenngröße aufnimmt, wobei als wenigstens eine Markierung (8) eine auf dem flächigen Gegenstand vorhandene Wort- und/oder Bildinformation (8a) verwendet wird, und wobei das Erfassen der wenigstens einen Markierung in Abhängigkeit eines Vergleichs einer von der Sensoreinrichtung (5) vor dem Erfassungsvorgang hinsichtlich der Kenngröße ermittelten Referenz (8r) der wenigstens einen Markierung mit der von der Sensoreinrichtung (5) aufgenommenen wenigstens einen Markierung (8) hinsichtlich der Kenngröße verifiziert wird.

2. Verfahren nach Anspruch 1, **dadurch gekennzeichnet, dass** als Kenngröße zur Aufnahme beziehungsweise Analyse der wenigstens einen Markierung (8) ein Helligkeits- oder Farbkontrast gewählt wird.

3. Verfahren nach Anspruch 1 oder 2, **dadurch gekennzeichnet, dass** anhand einer wiederholten Erkennung der Position der Markierung die Geschwindigkeit des flächigen Gegenstands gegenüber der Sensoreinrichtung ermittelt und ein Schaltvorgang ausgelöst wird, wenn die Markierung oder ein zur Markierung entlang der Vorschubrichtung definiert beabstandeter Punkt eine anhand der Geschwindigkeit ermittelte Ortsposition erreicht.

4. Verfahren gemäß dem vorstehenden Anspruch, **dadurch gekennzeichnet, dass** mit dem Schaltvorgang ein Trennwerkzeug, insbesondere ein Schneidwerkzeug ausgelöst wird, welches den Gegenstand an definierter Position bezüglich der Position der Markierung auftrennt.

5. Verfahren nach einem der Ansprüche 1 bis 4, **dadurch gekennzeichnet, dass** eine Umrisslinie (8u) einer Kennzeichnung (8a) auf dem flächigen Gegenstand (2) als die wenigstens eine Markierung benutzt wird und/oder dass die Kennzeichnung eine auf wenigstens einem Abschnitt des flächigen Gegenstands angebrachte Kopf- und/oder Fußbedruckungszeile ist.

6. Verfahren nach einem der Ansprüche 1 bis 5, **dadurch gekennzeichnet, dass** ein Schwellenwert der Kenngröße vorgegeben wird, über dessen Nachweis ein Vorliegen der wenigstens einen Markierung (8a) erkannt wird und/oder dass mehrere Markierungen (81, 82) mit unterschiedlichen Schwellenwerten erfasst werden.

7. Verfahren nach einem der Ansprüche 1 bis 6, **dadurch gekennzeichnet, dass** ein mittlerer Bereich (8u) der wenigstens einen Markierung (8a) optisch auf die Sensoreinrichtung (5) abgebildet und entsprechend analysiert wird, wobei vorzugsweise der Schwellenwert in dem mittleren Bereich (8u) der wenigstens einen Markierung (8a) festgelegt wird.

8. Verfahren nach einem der Ansprüche 1 bis 7, **dadurch gekennzeichnet, dass** ein Abstand der wenigstens einen Markierung (8) von einer Sollposition der Sensoreinrichtung (5) zu wenigstens zwei Zeitpunkten aufgenommen wird.

9. Verfahren nach Anspruch 8, **dadurch gekennzeichnet, dass** über eine numerische Operation aus Wertepaaren der wenigstens zwei Zeitpunkte und der relativen Position der wenigstens einen Markierung (8) zu der Sensoreinrichtung (5) die Momentangeschwindigkeit der wenigstens einen Markierung (8) bezüglich der Sensoreinrichtung (5) ermittelt wird.

10. Vorrichtung zum Erfassen wenigstens einer auf einem flächigen Gegenstand (2), insbesondere einer Druckbahn vorgesehenen Markierung (8), wobei die Vorrichtung (1) ein optisches Element (10) zur Abbildung der wenigstens einen Markierung (8) auf eine Sensoreinrichtung (5) enthält und die Sensoreinrichtung (5) zur Aufnahme der abgebildeten wenigstens eine Markierung (8) hinsichtlich einer Kenngröße ausgebildet ist, **dadurch gekennzeichnet, dass** die wenigstens eine Markierung (8) eine auf dem flächigen Gegenstand (2) vorhandene Wort- und/oder Bildinformation (8a) ist und dass die Vorrichtung eine der Sensoreinrichtung (5) zugeordnete Komparatoreinheit (11) enthält, in der eine Referenz (8r) der wenigstens einen Markierung hinsichtlich ihrer Kenngröße gespeichert ist, wobei die Komparatoreinrichtung (11) zur Verifizierung des Erfassens der wenigstens einen Markierung (8) über eine Auswertung eines Vergleichs der gespeicherten Markierung (8r) mit der von der Sensoreinrichtung (5) aufgenommenen, wenigstens einen Markierung (8) hinsichtlich der Kenngröße ausgebildet ist.

11. Vorrichtung nach Anspruch 10, **dadurch gekennzeichnet, dass** sie zur Aufnahme einer ausgedehnten Kennzeichnung (8a) als wenigstens eine Markierung und/oder zur Erfassung mehrerer Markierungen (81, 82) mit unterschiedlichen Schwellenwerten ausgebildet ist.

12. Vorrichtung nach einem der Ansprüche 10 oder 11, **dadurch gekennzeichnet, dass** die Komparatoreinheit (11) zur Speicherung eines Schwellenwertes der Kenngröße ausgebildet ist, über dessen Nachweis ein Vorliegen der wenigstens einen Markierung durchführbar ist.

13. Vorrichtung nach einem der Ansprüche 10 bis 12, **dadurch gekennzeichnet, dass** sie zur Bestimmung der Momentangeschwindigkeit der wenigstens einen Markierung (8) bezüglich der Sensoreinrichtung (5) ausgebildet ist.

14. Vorrichtung nach einem der Ansprüche 10 bis 13, **dadurch gekennzeichnet, dass** die Vorrichtung eingerichtet ist, Positionen einer Markierung mehrmals hintereinander zu erkennen und eine Recheneinrichtung umfasst, welche eingerichtet ist, anhand der Positionen der Markierung einen Zeitpunkt zu berechnen, an welchem die Markierung oder ein zur Markierung entlang der Vorschubrichtung in definiertem Abstand beabstandeter Punkt eine Sollposition erreicht, und wobei die Vorrichtung einen Schaltausgang aufweist, an welchem unter Ansprechen darauf, dass die Sollposition erreicht ist, ein Schaltsignal ausgegeben wird.

15. Einrichtung zum Trennen (27) von Abschnitten (23a, 24a) von einem flächigen Gegenstand (23, 24), insbesondere einer Druckbahn entlang vorgebbarer Markierungen (81, 82), **gekennzeichnet durch** eine Vorrichtung (1) nach einem oder mehreren der Ansprüche 10 bis 14.
